# EUROPEAN PATENT SPECIFICATION

(11) **EP 2 809 166 B1**
(45) Date of publication and mention of the grant of the patent: **15.04.2020**
(21) Application number: 13707420.9
(22) Date of filing: 31.01.2013
(51) Int. Cl.: A23C 9/14, A23K 50/10, A23K 20/158, A23C 9/152, A23C 9/13

(54) **MILK AND A PROCESS FOR ITS PREPARATION**
MILCH UND PROZESS ZU DEREN HERSTELLUNG
LAIT ET SON PROCÉDÉ DE PRODUCTION

(30) Priority: 31.01.2012 FI 20120032; 20.06.2012 EP 12397519
(43) Date of publication of application: 10.12.2014
(73) Proprietor: Nutes Oy, 00400 Helsinki (FI)
(72) Inventor: HOLMA, Merja, FI-21200 Raisio (FI)
(74) Representative: Laine IP Oy
(86) International application number: PCT/FI2013/000004
(87) International publication number: WO 2013/113981

(56) References cited:
- EP-A1- 1 925 211
- WO-A1-2005/013707
- WO-A1-2006/085774
- WO-A1-2012/053893
- US-A- 5 093 128
- MOSLEY S A ET AL: "Effect of Varying Levels of Fatty Acids from Palm Oil on Feed Intake and Milk Production in Holstein Cows", JOURNAL OF DAIRY SCIENCE, AMERICAN DAIRY SCIENCE ASSOCIATION, US, vol. 90, no. 2, 1 February 2007 (2007-02-01), pages 987-993, XP026955752, ISSN: 0022-0302 [retrieved on 2007-02-01]
- P. SECCHIARI ET AL: "Effect of kind of dietary fat on the quality of milk fat from Italian Friesian cows", LIVESTOCK PRODUCTION SCIENCE, vol. 83, no. 1, 1 September 2003 (2003-09-01), pages 43-52, XP055066722, ISSN: 0301-6226, DOI: 10.1016/S0301-6226(03)00043-5
- CLAPPERTON J L ET AL: "FACTORS AFFECTING THE YIELD OF MILK AND ITS CONSTITUENTS PARTICULARLY FATTY-ACIDS WHEN DAIRY COWS CONSUME DIETS CONTAINING ADDED FAT", JOURNAL OF THE SCIENCE OF FOOD AND AGRICULTURE, vol. 36, no. 12, 1985, pages 1205-1211, XP002698916, ISSN: 0022-5142
- WARNTJES J L ET AL: "Effects of feeding supplemental palmitic acid (C16:0) on performance and milk fatty acid profile of lactating dairy cows under summer heat", ANIMAL FEED SCIENCE AND TECHNOLOGY, ELSEVIER, AMSTERDAM, NL, vol. 140, no. 3-4, 15 January 2008 (2008-01-15), pages 241-257, XP022778072, ISSN: 0377-8401, DOI: 10.1016/J.ANIFEEDSCI.2007.03.004 [retrieved on 2008-01-15]
- Helena Lindmark Månsson: "Fatty acids in bovine milk fat", Food & Nutrition Research, 10 June 2008 (2008-06-10), pages 1-3, XP055372129, DOI: 10.3402/fnr.v52i0.1821 Retrieved from the Internet: URL:https://www.tandfonline.com/doi/full/1 0.3402/fnr.v52i0.1821 [retrieved on 2017-05-12]
- Mauro Antongiovanni ET AL: "Upgrading the lipid fraction of foods of animal origin by dietary means: rumen activity and presence of trans fatty acids and CLA in milk and meat", Italian Journal of Animal Science, vol. 2, no. 1, 1 January 2003 (2003-01-01) , pages 3-28, XP055372175, DOI: 10.4081/ijas.2003.3

## Description

An object of this invention is milk in which the concentrations of palmitoleic acid and preferably also palmitic acid are higher than in traditional milk. At the same time the amounts of trans fatty acids and C6-C12 saturated fatty acids are lower than in traditional milk. The milk according to the invention has been produced by a process wherein to a lactating animal is given feed which contains inside and on the surface of feed raw material particles a fatty acid mixture wherein the content of saturated fatty acids is over 90%.

### Background

Consumption of liquid milk products decreased slowly in Finland during 1990's but during the last decade the decrease in consumption was broken. Moreover, the earlier trend towards low-fat and non-fat products has recently turned back to products containing more fat, the consumption of which grows rapidly. Thus for example the consumption of butter has during the last 2 years almost doubled. As a whole, butter was eaten 10 million kilos more in 2011 than two years earlier. A similar trend prevails also elsewhere in Europe. At the same time milk production in our country has decreased and there is thus room for increase in milk production as well as in milk fat content. Furthermore, consumers prefer products wherein basic food products have been combined with health promoting components, such as plant sterols and their esters, n-3 fatty acids, nutritional fibers, vitamins, probiotics and minerals, such as calcium.

Thanks to rumen, fiber that is unsuitable for monogastric animals can be utilized in cow feeding. However, due to rumen function a problem is that approximately 10% of feed energy is lost as methane and thus the energy efficiency is declined. In addition, the environment is burdened. The rumen function is also linked to a problem concerning the nutritional value of milk fat. Milk fat is rich in saturated fatty acids and it contains a rather high amount of trans fatty acids. Dietary trans fatty acids have been connected especially to an increase of the harmful LDL cholesterol and to a decrease of the beneficial HDL cholesterol in human blood. Dietary saturated fats are not as harmful since they increase also the proportion of the good cholesterol, that is HDL compared to the harmful LDL cholesterol.

Milk composition and fat quality can to a some extent be influenced by feeding of the cows. It is known that when oils are given to cows, milk fat becomes softer. However, oil feeding has negative impacts on both rumen function and milk quality. Protein content is lowered, the proportion of trans fatty acids increases and the processability properties of milk fat are weakened. A high level of polyunsaturated fatty acids in milk also causes taste defects and preservation problems.

A typical fatty acid composition of milk fat contains over 70% of saturated fatty acids. The total amount of trans fatty acids varies in the range of 3-10%. When vegetable oil is added into the feed, the proportion of trans fatty acids may rise even over 10%.

When a cow eats unprotected fat along with its feed, the fat is exposed to the action of rumen microbes. The lipase enzymes produced by the microbes hydrolyse the ester bonds of triglycerides, forming glycerol and free fatty acids. Hydrolysis is rapid, since already an hour after feeding most triglycerides have been hydrolysed and thus the content of free fatty acids in rumen is increased. Fatty acids have to be in free form before the microbes can utilize them. After the polyunsaturated fatty acids have been released, they start to be hydrogenated in the rumen. Biohydrogenation proceeds step by step so that the end result consists mainly of stearic acid, but the biohydrogenation process is not complete and several different fatty acids, including trans fatty acids, are formed in the rumen as intermediate products of hydrogenation. For this reason, adding vegetable oil to feed results in accumulation of trans fatty acids in milk. The high amount of polyunsaturated fatty acids in feed causes taste defects and preservation problems in milk.

Biohydrogenation protects rumen microbes because polyunsaturated fatty acids are toxic especially to cellulolytic bacteria. Digestion of fiber may therefore decrease. The detrimental effect of fats can be diminished by preventing fat hydrolysis. Fat hydrolysis can be decreased for example by protecting fats with casein which has been treated with formaldehyde. Another alternative is to make insoluble fatty acid calcium salts whereby hydrogenation in rumen can be avoided. However, the disadvantages of fatty acid salts limit their usability in feeds. The pungent taste of the salts results in decreased feed intake. The salts may also disturb pelletizing process of the feed.

By infusing partly hydrogenated vegetabe oil past the rumen, milk fat content has decreased in experiments. Partly hydrogenated vegetable oil contains trans fatty acids which have been found to prevent fat synthesis in the mammary gland. A typical industrially partly hydrogenated vegetable oil (soya oil) contains 30-35% trans fatty acids.

In a study by Mosley S.A. et al. (Journal of Dairy Science 90:987-993) a ruminant TMR diet was supplemented with three levels of palm oil fatty acids. Milk protein content (protein percentage) did not increase, but it tended to decrease linearly (P<0.08) with palm oil supplement, even though the energy intake of the cows was increased in the test groups receiving the palm oil supplement.

Lindmark Månsson H. (Food & Nutrition Research 2008) reported a fatty acid composition expressed as percent by weight of total fatty acids in Swedish dairy milk in 2001, given as weighted means with standard deviations and as the minimum and maximum weighted means.

WO2006/063444 describes a method for preparing an animal feed component by mixing at least one ground pulse product with whole or intact oilseeds. Also described is the use of the feed component in the production of animal products having increased levels of omega-3 and omega-6 fatty acids.

WO2011/066526 relates to enhancement of desirable characteristics in ruminant animals and ruminant products through the incorporation of beneficial fatty acids.

EP 0479555 describes extruded animal feed nuggets comprising at least 20 wt% starch and at least 15 wt% added fat. The nuggets increased the milk yield of cows, but at the same time decreased both the fat content (%) and protein content (%) of the milk.

WO 2010/151620 describes extruded feed particles that have been vacuum coated with a high amount of two different fats: first a low melting point fat and then a high melting point fat that encloses the low melting point fat.

WO 2010/108483 describes a method for producing animal food by means of fat extrusion, wherein heated fat is sparayed and cooled so that particles are formed with at least one additive or component, such as selenium. The fat content of the product is high, 30-99.5 % and the additive or component is embedded in the fat. The goal is to protect sensitive additives or components in rumen.

Rumen protected fat supplements have been developed and are marketed e.g. by trade names Lipitec Bovi HF and Energizer RP10.

Santschi D.E. et al. (Canadian Journal of Animal Science 89:383-392) studied colostrum and milk fatty acids of dairy cows influenced by extruded linseed supplementation during the transition period.

In a study by Petit H.V. et al. (Animal Feed Science and Technology 169:46-52) pro-duction performance and milk composition of dairy cows fed with different concentrations of flax hulls was examined.

Moate P.J. et al. (Journal of Dairy Science 90:4730-4739) studied influence of diet type on concentrations of individual fatty acids in bovine milk.

WO 2012/053893 describes a milk composition having an increased unsaturated fatty acids and a decreased trans fatty acids content.

Until now, a disadvantage with all ways of feeding dairy cows in order to increase milk fat content has been that they lower milk production and/or lower protein content and/or cause undesired effects, such as increased trans fatty acid levels, on the fatty acid profile of the milk fat.

### Description of the invention

According to the invention, milk has been developed, with increased fat content (percentage) compared to a traditional milk. The fatty acid composition of the milk according to the invention comprises at least 1.8% palmitoleic acid, at least 33 % palmitic acid, and at most 2.0% total trans fatty acids. The fatty acid composition of the milk according to the invention preferably comprises at most 1.9% of trans fatty acids, more preferably at most 1.8%, 1.7%, 1.6%, 1.5%, 1.4%, 1.3%, 1.2%, 1.1%, 1.0%, 0.90%, 0.80%, 0.70%, 0.60%, 0.50%, 0.40%, 0.30%, 0.20% or 0.10%, and most preferably the milk fatty acid composition does not comprise trans fatty acids.

The fatty acid composition of the milk according to the invention contains at least 5%, preferably at least 10% more palmitoleic acid than the fatty acid composition of traditional milk. Further, the milk fatty acid composition contains at least 5%, preferably at least 10 % more palmitic acid than the fatty acid composition of traditional milk. Moreover, the milk fatty acid composition comprises less C6-C12 saturated fatty acids than the fatty acid composition of traditional milk, preferably at least 5% less, more preferably at least 10% less.
By traditional milk is here meant milk that is produced without adding fat/oil to the diet of a cow. Such a diet contains usually about 2-3 % by weight of triglycerides in the conventional feed ingredients.

Preferably the milk fatty acid composition comprises at least 2.0% palmitoleic acid, more preferably at least 2.3%, even more preferably at least 2.5% and most preferably at least 2.7%. Further, the milk fatty acid composition contains palmitic acid preferably at least 35 %, and most preferably at least 37 %.
Furthermore, the fatty acid composition of the milk according to the invention preferably comprises C6-C12 saturated fatty acids at most 10%, preferably at most 9.8%, more preferably at most 9.5%, even more preferably at most 9.3%, still even more preferably at most 9.0% and most preferably at most 8.5%.

Furthermore, the food products containing the milk according to the invention may contain at least one health promoting component selected from the group consisting of plant sterols and their esters, n-3 fatty acids, vitamins, such as A, D, E and K vitamins, dietary fibers, probiotics and minerals, such as calcium. Preferably the food product containing the milk according to the invention contains plant sterols and their fatty acid esters. Plant sterols include and preferably are 4-desmethyl sterols and 4-monomethyl sterols, 4-desmethyl stanols and 4-monomethyl stanols. Typical 4-desmethyl sterols are sitosterol, campesterol, stigmasterol, brassicasterol, 22-dehydro-brassicasterol and δ5-avenasterol. Typical stanols are sitostanol, campestanol and their 24-epimers. The preferred amount of plant sterols or their esters is from 0.1 to 10% by weight, more preferably from 0.2 to 5 % by weight and most preferably from 0.5 to 3 % by weight.

The milk according to the invention has been produced by a process according to claim 9 wherein to a lactating animal is given feed, which contains conventional feed ingredients and conventional additives and other auxiliary agents and, in addition, inside and on the surface of feed raw material particles a fatty acid mixture wherein the content of saturated fatty acids is over 90%.

By "conventional feed ingredients and conventional additives and other auxiliary agents" is meant a mixture of at least two commonly used feed raw materials, i.e. raw materials that can be used as starting materials in preparation of the feed mixture according to the present invention. Such feed raw materials include for example grain (for example such as wheat, oat, barley) and oilseed meals (for example such as rapeseed meal or soybean meal). In addition "conventional feed ingredients and conventional additives and other auxiliary agents" may contain for example molasses, vitamins and minerals. Chemically "conventional feed ingredients and conventional additives and other auxiliary agents" include at least protein and starch. The protein content is 15-55 %, preferably 16-45 %, more preferably 17-40 % of the "conventional feed ingredients and conventional additives and other auxiliary agents". The starch content is 5-50 %, preferably 15-45 %, more preferably 15-35 % and most preferably 15-25 % of the "conventional feed ingredients and conventional additives and other auxiliary agents".

Food products which contain the milk according to the invention may include conventional food products prepared from milk, such as for example various basic milks, special milks, creams, fermented milk products, such as sour milks, curdled milks, curdled cream, yoghurt, quark, sour cream, cottage cheese, French sour cream, as well as puddings, ice creams, milk powders, infant formulas, cheese, butter, butter-vegetable oil mixtures, etc.

The invention is also related to a process according to claim 9 for preparing milk, wherein to a lactating animal is given feed which contains conventional feed ingredients and conventional additives and other auxiliary agents and, in addition, the feed contains inside and on the surface of feed raw material particles a fatty acid mixture wherein the content of saturated fatty acids is over 90%, and then the milk is recovered.

The milk according to the invention has many beneficial health effects. A high amount of trans fatty acids has been connected to an increase of the detrimental LDL cholesterol and to a decrease of the good HDL cholesterol, and therefore lowering of their amount in milk is highly desirable. For palmitoleic acid (C16:1), several health-promoting effects have been proposed. Milk saturated fatty acids have been connected to a higher increase of the good HDL cholesterol than the harmful LDL cholesterol. Plants sterols lower the harmful LDL cholesterol. The present invention provides products according to the claims wherein the beneficial effects on the proportion of the good HDL cholesterol and the harmful LDL cholesterol are enhanced compared to traditional milk.
The feed mixture which is given to a lactating animal in a process according to the invention, contains a fatty acid mixture having a high melting point. When this fatty acid mixture is added to a feed which is heated to at least above the melting point of the fatty acid mixture, the fat gradually melts into the raw material particles of the feed. The heat treatment is carried out before feed pelletizing or drying, or in connection with the pelletizing. When the feed cools down, part of the proteins and starch of the feed mixture is protected from microbial degradation. Also the fat is (preferably free fatty acids are) protected from microbial action and on the other hand microbes are protected from fat and thus digestion of roughage (e.g. coarse feed) remains good. The amount of saturated fatty acids in the fatty acid mixture used in the feed is high, and in addition the mixture is essentially free of trans fatty acids.. "Essentially free" or "does not essentially contain" mean within this context that the fatty acid mixture contains at most 5%, preferably at most 4%, more preferably at most 3%, even more preferably at most 2%, still even more preferably at most 1%, again even more preferably at most 0.5% and most preferably no trans fatty acids at all.

In the milk preparation process according to claim 9 the fatty acid mixture is used in an amount of approximately 1-10 % by weight, based on the total weight of the feed. In case of a complete feed, the fatty acid mixture is used in an amount of approximately 1-6 % by weight, preferably 2-5 % by weight. In a concentrate feed, the amount of fatty acid mixture is 2-10 % by weight, preferably 3-8 % by weight, based on the total weight of the feed. Both milk production and milk fat content can be increased. Moreover, milk protein content is not lowered but rather is increased. Also the proportion of milk trans fatty acids diminishes. The proportion of saturated fatty acids remains approximately the same but the proportion of oleic acid and/or palmitoleic acid is increased.

However, the feed mixture used in the milk preparation process according to the invention does not disturb rumen function. Digestion of fiber remains at the same level, milk protein content is slightly increased and fat content is remarkably increased. Also milk production rises. Since part of the easily digestable nutrients can pass directly by the rumen undigested, methane formation can be decreased which improves utilization of nutrients.

The fatty acid mixture used in the feed contains more than 90%, preferably more than 95%, more preferably more than 98%, of saturated fatty acids, based on the total amount of the fatty acid mixture. The fatty acid mixture may also wholly consist of saturated fatty acids. The feed for the purposes of the invention contains a fatty acid mixture comprising at least 90%, of palmitic acid (C16:0) and at most 10%, of stearic acid (C18:0), based on the total amount of the fatty acid mixture. Even more preferably the fatty acid mixture contains at least 95% palmitic acid and not more than 5% stearic acid, and 0-1% of other fatty acids.

The above mentioned saturated fatty acids are already as such protected from microbes as their melting point is high. When the feed is prepared as describe above, also other components of the feed are protected, and thus both fatty acids and starch and amino acids are more evenly absorbed from the small intestine. Thus a high amount of fat does not get alone as such into the small intestine, in which case the absorbtion capacity could limit its good effects on milk production.

The Δ9-desaturase enzyme in cow's mammary gland converts part of stearic acid into oleic acid (C18:1), which softens milk fat. Because stearic acid in large amounts may weaken milk production capacity in the mammary gland, in the process according to the invention a feed is used wherein the fatty acid mixture used in its preparation contains no more than 10% of stearic acid.

The fatty acid mixture may also contain small amounts of unsaturated fatty acids. The proportion of unsaturated fatty acids of the total amount of the fatty acid mixture is 0-10%, more preferably 0-5%, even more preferably 0-2%. The most preferred unsaturated fatty acid for the purposes of the invention is oleic acid (C18:1). Another useful fatty acid is palmitoleic acid (C16:1).

A fatty acid mixture may contain 80-100% palmitic acid, 0-20% stearic acid, 0-3% oleic acid, no trans fatty acids and 0-3% other fatty acids (not the entire range is according to the invention).

Although the fatty acid mixture may theoretically be 100% pure palmitic acid, it is here still called a fatty acid mixture.

The melting point of a fatty acid mixture rich in saturated fatty acids is high, more than 60°C, for example 60-80°C, preferably 63-65°C. The iodine value of a fatty acid mixture usable in the invention is 0-1.

Fatty acids in the fatty acid mixture which the feed to be given to a lactating animal contains are preferably almost hundred-percent free fatty acids (at least 99%). It is also possible that part of the fatty acids are in triglyceride, diglyceride or monoglyceride forms, but when given as free fatty acids, their utilization in the small intestine is improved as lipase enzymes do not need first to degrade triglycerides into glycerol and free fatty acids. The fatty acid mixture thus comprises at least 99% of free fatty acids.

In the milk according to the invention it was surprisingly succeeded to lower milk trans fatty acid content so that the produced milk contained less than 2.0% trans fatty acids, of the milk fatty acids. In Finland, the fatty acid composition of a typical winter milk contains about 3% trans fatty acids. If the diet contains oil, the amount is increased.

In the milk preparation process according to the invention a feed is used, the preparation of which comprises adding with simultaneous mixing to conventional feed ingredients and conventional feed additives and auxiliary agents a fatty acid mixture in which the proportion of saturated fatty acids is more than 90%, heating the feed mixture so that the fatty acid mixture melts and spreads on the surface and inside of the feed raw material particles, and then the feed mixture is optionally pelletized and cooled. Preferably the whole feed mixture is processed. Thereby part of the proteins and starch of the feed mixture is protected from microbial degradation. With the process according to the disclosure one can preferably protect the whole feed mixture from microbial degradation.

The feed used for feeding the lactating animal contains conventional feed ingredients and conventional additives and other auxiliary agents and in addition said feed contains a fatty acid mixture, wherein in case of a complete feed, the fatty acid mixture is used in an amount of 1-6% by weight, and in case of a concentrate feed, the amount of fatty acid mixture is 2-10%, based on the total weight of the feed. The proportion of saturated fatty acids in the fatty acid mixture is over 90% and the fatty acid mixture comprises at least 99% free fatty acids, at least 90% palmitic acid (C16:0), at most 10% stearic acid (C18:0), 0-3% other fatty acids, and is free of trans fatty acids, has a melting point of >60°C and a iodine value of ≤1.

By preparing feed as described above, more digestable nutrients are transported to the cow's small intestine. This enables positive changes in milk production as well as in milk composition and in degree of utilization of the feed. Preferably the degree of utilization of feed is increased by 5 %, more preferably by 10 % and most preferably by 15 % when calculated as the the efficiency of utilization of metabolizable energy intake for milk production (kl).

Preparing the feed as described above can preferably be performed in a conditioner or expander, more preferably in a long term conditioner or expander, and most preferably in a longterm conditioner.

Melting of the fatty acid mixture inside and on the surface of feed raw material particles can be done by heating the feed mixture in a long term conditioner, for example at a temperature of at least 75 °C for at least 20 minutes. When higher temperature is used, heating time may correspondingly be shorter. However, the temperature may preferably not exceed 85 °C. On the other hand, also lower temperature, for example 70 °C for at least 25 minutes, may be used. After the heat treatment the feed mixture is pelletized and cooled.

Alternatively, a feed mixture wherein the fatty acid mixture has been blended can be treated with an expander whereby the pressure and heat in the expander melt and absorb the fatty acid mixture inside and on the surface of feed raw material particles. The pressure in an expander treatment is typically 10-40 bar and temperature over 100°C, whereby retention time may be 3-6 seconds. After the expander treatment the feed mixture is pelletized and cooled.

Thirdly, the feed described above can be produced by heat treatment during preconditioning in the pelletizer, if the conditions (temperature, pressure, moisture and time) are suitable to cause the fatty acid mixture to melt and to be absorbed inside and on the surface of the feed raw material.

Preferably the process according to the disclosure does not include extrusion. Such processing conditions are probably too severe for producing a ruminant feed.

An emulsifier which promotes the absorption of fatty acid mixture into feed raw material particles can preferably be added to the rest of the feed mixture before heating. An emulsifier is added in an amount of 0.01-1.0 %, preferably 0.02-0.2, most preferably 0.02-0.05% by weight, based on the total weight of the feed mixture. The emulsifier can be chosen among conventional substances used as emulsifiers. Preferably the emulsifier is a non-ionic emulsifier. More preferably it has a HLB value of at least 5, more preferably at least 7, and most preferably at most 14. Examples of emulsifiers usable in the process according to the invention are castor oil based emulsifiers which are sold for example under the trade name Bredol®. The amount of the emulsifier is 0.2-2.0%, more preferably 0.5-1.5% and most preferably 0.8-1.2% of the fatty acid mixture.

The milk according to the invention is produced by a process wherein to a lactating animal is given a milk composition changing amount of the feed disclosed above. A milk composition changing amount means an amount of complete feed or concentrate feed which conforms to the normal feeding recommendations of the lactating animal. The changes in milk composition are detected as an increase in the amount of palmitoleic acid and/or oleic acid. Preferably the changes are detected also as a decrease in the amount of trans fats and C6-C12 saturated fatty acids. The changes are partly shown already a week after the change in feeding but the change in the microbial function takes 3-4 weeks and thus the whole change is detectable only after 3 weeks.

The feed described above can provide the animal a daily amount of the fatty acid mixture 0.2-1.0 kg/day, preferably between 0.3-0.8 kg/day, and most preferably between 0.4-0.7 kg/day. Typically the daily amount of the fatty acid mixture is at least 0.2 kg/day, preferably at least 0.3 kg/day, more preferably at least 0.4 kg/day, and most preferably at least 0.5 kg/day. The dosing can also be expressed as amount of fatty acid mixture ingested via the feed according to the invention per amount of produced milk. Suitable dosages are e.g. 10-300 g fatty acid mixture/10 kg milk, more preferably 60-160 g fatty acid mixture/10 kg milk, and most preferably about 100 g fatty acid mixture/10 kg milk. These daily amounts or amounts per 10 kg milk pro-duction can suitably be applied in any method or use disclosed here below.

A special feature of the feed to be given to the lactating animal is that the fatty acid mixture added into it has during the preparation process of the feed mixture protected digestible nutrients of the feed. By means of the process according to the disclosure the fatty acid mixture is evenly applied inside and on the surface of the feed raw material particles whereby utilization of nutrients becomes more effective and also methane production is decreased. In particular, the feed raw material particles are protected also inside the feed pellets or granules. Also the fat itself is protected from microbial degradation and on the other hand the fat does not disturb microbial function and thus digestion of coarse feed. A fatty acid having a melting point more than 60 °C is as such already protected against microbial action. The feed thus prepared rises the content of palmitoleic acid and/or oleic acid in milk.

The remarkable decrease in the amount of milk trans fats was particularly surprising. It was not expected, since the trans fatty acid amount of normal milk fatty acids is at least 3% even without fat addition, when feeding comprises silage and conventional compound feed based on grains and rapeseed This confirms that the raw material particles of the feed prepared according to the process described above have been protected from rumen degradation. Thus for example the triglyceride hydrolysis of the feed raw materials and the hydrogenation of the unsaturated fatty acids released therefrom has evidently at least partly been hindered. This has decreased formation of trans fatty acids.

The following examples illustrate the invention. The fatty acid percentages presented in this application are percentages which disclose relative chromatogram peak areas, as is evident to a person skilled in the art.

### Example 1. Complete feed usable in the invention

The following raw materials were selected for the preparation of complete feed (in percentages by weight).

| | 1. | 2. | 3. |
|---|---|---|---|
| Rapeseed or soya meal | 0-60 | 10 - 50 | 20 - 30 |
| Feed grain (wheat, barley, oats) | 0-70 | 10 - 65 | 20 - 40 |
| Sugar beet pulp | 0-20 | 2 - 18 | 5 - 15 |
| Wheat bran | 0-30 | 5 - 25 | 10 - 15 |
| Molasses | 4-8 | 3 - 7 | 4 - 5 |
| Wheat middlings | 0-20 | 3 - 15 | 3 - 5 |
| Minerals | 0-5 | 0 - 5 | 0 - 5 |
| Premixes (vitamins and micronutrients) | 0-2 | 0 - 2 | 0 - 2 |
| Fatty acid mixture usable in the invention | 2- 5 | 2 - 5 | 3 - 4 |
| Emulsifier | 0.02 - 0.05 | 0.02-0.2 | 0.02 - 0.05 |

### Example 2. Concentrate feed usable in the invention

The following raw materials were selected for the preparation of concentrate feed (percentages by weight):

| | 1. | 2. | 3. |
|---|---|---|---|
| Vegetable oilseed meal (soya, rapeseed) | 70-97 | 40 - 90 | 50 - 80 |
| Pea, broad bean | 0-20 | 2 - 18 | 5 - 15 |
| Distiller's grains | 0-20 | 1 - 15 | 3 - 10 |
| Fatty acid mixture usable in the invention | 3-10 | 3 - 10 | 3 - 8 |
| Sugar beet pulp, bran | 0-20 | 2 - 18 | 5 - 15 |
| Grain | 0-10 | 1 - 10 | 2 - 8 |
| Molasses | 0-5 | 1 - 4 | 1 - 3 |
| Premixes (vitamins and micronutrients) | 0-3 | 0 - 3 | 0 - 3 |
| Minerals | 0-5 | 0 - 5 | 0 - 5 |
| Emulsifier | 0.02 - 0.05 | 0.02-0.2 | 0.02 - 0.05 |

### Example 3. Fatty acid composition of a fatty acid mixture usable in the invention

| Fatty acid | % |
|---|---|
| C16:0 | ≥90 |
| C18:0 | ≤10 |
| others | <3 |
| trans fatty acids | 0 |
| free fatty acids | ca. 100 |
| melting point | >60 °C |
| iodine value | ≤1 |

### Example 4. Preparation of a test feed usable in the invention

The raw materials of example 1 were selected as starting materials as follows (percentages by weight):

| | |
|---|---|
| Rapeseed meal | 30 |
| Barley | 30 |
| Wheat | 20 |
| Sugar beet pulp | 10.3 |
| Mixed molasses | 4.0 |
| Mineral mixture | 2.3 |
| Micronutrient mixture | 0.2 |
| Vitamin mixture | 0.2 |
| Emulsifier | 0.03 |
| Fatty acid mixture usable in the invention | 3.0 |

The fatty acid mixture according to example 3 (3.0 % by weight) and emulsifier (0.03 % by weight) were mixed into the starting materials to obtain 100% by weight of feed mixture. The feed mixture was mixed in a horizontal mixer for 3 minutes, emulsifier and the fatty acid mixture were melted with it into the feed mass in a longterm conditioner for 20 minutes at a temperature of 77 °C, in order to slowly melt and spread the fatty acid mix-ture evenly inside and on the surface of the feed raw material particles with the help of the emulsifier. Then the feed mass was pelletized and cooled.

### Example 5. Preparation of milk according to the invention

In this feeding experiment cows were given 6-16 kg a day of a reference feed or the test feed according to example 4. As a reference feed was used a complete feed mix-ture which had been prepared by mixing the starting materials (without fatty acid mix-ture and emulsifier) of example 4 with rapeseed oil (1.5 % by weight) and calcium salt of palm oil fraction (1.5 % by weight). Both test periods lasted for 4 weeks and the following results were obtained:

| | Reference feed | Test feed |
|---|---|---|
| Milk (kg/d) | 30.0 | 33.5 |
| Milk fat content (% by weight) | 4.16 | 4.53 |
| Milk protein content (% by weight) | 3.16 | 3.27 |

The effect of test feeding on milk fatty acids:

| | Reference | Test feeding |
|---|---|---|
| trans fatty acids | 4.3 % | 1.9 % |
| palmitoleic acid | | 2.7 % |
| palmitic acid | | 39.1 % |
| C6-C12 unsaturated | | 9.0 % |

### Example 6. Another preparation of milk according to the invention

In this feeding experiment cows were given 8-12 kg a day of a reference feed or the test feed according to example 4. A commercially obtained complete feed mixture was used as a reference feed. Both test periods lasted for 4 weeks and the following results were obtained:

| | Reference feed | Test feed |
|---|---|---|
| Milk (kg/d) | 28.5 | 30.5 |
| Milk fat content (% by weight) | 4.45 | 4.90 |
| Milk protein content (% by weight) | 3.55 | 3.67 |

The effect of test feeding on milk fatty acids:

| | Reference | Test feeding |
|---|---|---|
| trans fatty acids | 4.9 % | 1.8 % |
| palmitoleic acid | | 2.8 % |
| palmitic acid | | 36.4 % |
| C6-C12 unsaturated | | 9.4% |

The results from test feedings show that in the milk according to the invention the amount of trans fatty acids is significantly lower.

### Example 7. Cocoa drink from the test milk of Example 5

Two cocoa drinks with the following recipes (% by weight) were prepared:

| | 1 | 2 |
|---|---|---|
| milk | 92.4 | 89.9 |
| sugar | 5.0 | 5.0 |
| cocoa | 2.5 | 2.5 |
| emulsifier | 0.1 | 0.1 |
| plant sterol ester | - | 2.5 |

### Example 8. Yoghurt drink from the test milk of Example 5

A yoghurt drink was prepared with the following recipe (% by weight):

| | |
|---|---|
| milk | 85.8 |
| sugar | 6.0 |
| fruit/berry concentrate | 6.0 |
| stabilizer | 0.2 |
| plant stanol ester | 1.0 |
| linseed oil | 1.0 |
| fermented with lactic bacteria | |

## Claims

1. Milk, **characterized in that** its fatty acid composition comprises at least 1.8% palmitoleic acid, at least 33% palmitic acid, and in addition totally at most 2.0% trans fatty acids, and wherein said milk has been produced by a process wherein to a ruminant is given a milk composition changing amount of a complete or concentrate feed which contains conventional feed ingredients and conventional additives and other auxiliary agents, wherein the conventional feed ingredients and conventional additives and other auxiliary agents include at least 15-55% protein and 5-50% starch, wherein said feed contains inside and on the surface of feed raw material particles a fatty acid mixture, wherein in case of a complete feed, the fatty acid mixture is used in an amount of 1-6% by weight, and in case of a concentrate feed, the amount of fatty acid mixture is 2-10%, based on the total weight of the feed, wherein the proportion of saturated fatty acids is over 90% and the fatty acid mixture comprises at least 99% free fatty acids, at least 90% palmitic acid (C16:0), at most 10% stearic acid (C18:0), 0-3% other fatty acids, and is free of trans fatty acids, has a melting point of >60°C and a iodine value of ≤1, thereby at least partially protecting the starch and protein from microbial degradation in the rumen, wherein the amount of fatty acid mixture ingested via the feed per amount of produced milk is 60-300 g of the fatty acid mixture/10 kg milk, and the milk is recovered.

2. Milk according to claim 1, **characterized in that** its fatty acid composition comprises at least 5%, preferably at least 10% more palmitoleic acid than the fatty acid composition of traditional milk.

3. Milk according to claim 1 or 2, **characterized in that** its fatty acid composition comprises at least 5%, preferably at least 10% more palmitic acid than the fatty acid composition of traditional milk.

4. Milk according to any one of claims 1-3, **characterized in that** its fatty acid composition comprises less C6-C12 saturated fatty acids than the fatty acid composition of traditional milk, preferably at least 5% less, more preferably at least 10% less.

5. Milk according to any one of claims 1-4, **characterized in that** its fatty acid composition comprises at least 2.0%, preferably at least 2.3%, more preferably at least 2.5% and most preferably at least 2.7% palmitoleic acid.

6. Milk according to any one of claims 1-5, **characterized in that** its fatty acid composition comprises at least 35%, preferably at least 37% palmitic acid.

7. Milk according to any one of claims 1-6, **characterized in that** its fatty acid composition comprises at most 10%, preferably at most 9.8%, more preferably at most 9.5%, even more preferably at most 9.3%, still even more preferably at most 9.0% and most preferably at most 8.5% C6-C12 saturated fatty acids.

8. Milk according to any one of claims 1-7, **characterized in that** it contains at least one health promoting component selected from the group consisting of plant sterols and their esters, n-3 fatty acids, vitamins such as A, D, E and K vitamins, nutritional fibers, probiotics and minerals, such as calcium.

9. A milk preparation process for preparing a milk according to any one of claims 1 to 7, **characterized in that** to a ruminant is given a milk composition changing amount of a complete feed or a concentrate feed which contains conventional feed ingredients and conventional additives and other auxiliary agents, including protein in an amount of 15-55% and starch in an amount of 5-50% of the conventional feed ingredients and conventional additives and other auxiliary agents, and wherein said feed contains inside and on the surface of feed raw material particles a fatty acid mixture, wherein in case of a complete feed, the fatty acid mixture is used in an amount of 1-6% by weight, and in case of a concentrate feed, the amount of fatty acid mixture is 2-10%, , based on the total weight of the feed, wherein the proportion of saturated fatty acids in the fatty acid mixture is over 90% and the fatty acid mixture comprises at least 99% free fatty acids, at least 90% palmitic acid (C16:0), at most 10% stearic acid (C18:0), 0-3% other fatty acids, and is free of trans fatty acids, has a melting point of >60°C and a iodine value of ≤1, thereby at least partially protecting the starch and protein from microbial degradation in the rumen, wherein the amount of fatty acid mixture ingested via the feed per amount of produced milk is 60-300 g of the fatty acid mixture/10 kg milk, and the milk is recovered.

10. Milk according to any one of claims 1-7 further containing 0.1-10 % by weight plant sterol or plant sterol ester for use in increasing HDL cholesterol and decreasing LDL cholesterol in human blood.

## Patentansprüche

1. Milch, **dadurch gekennzeichnet, daß** ihre Fettsäurezusammensetzung mindestens 1,8 % Palmitolsäure, mindestens 33 % Palmitinsäure und zusätzlich insgesamt höchstens 2,0% Transfettsäuren enthält, und wobei die Milch durch ein Verfahren hergestellt wurde, bei dem einem Wiederkäuer eine die Milchzusammensetzung verändernde Menge eines Vollfuttermittels oder Kraftfuttermittels verabreicht wird, das herkömmliche Futtermittelbestandteile und herkömmliche Zusatzstoffe und andere Hilfsstoffe enthält, wobei die herkömmlichen Futtermittelbestandteile und die herkömmlichen Zusatzstoffe und anderen Hilfsstoffe mindestens 15-55 % Protein und 5-50 % Stärke enthalten, wobei das Futtermittel im Inneren und auf der Oberfläche der Futtermittelrohstoffpartikel eine Fettsäuremischung enthält, wobei im Falle eines vollständigen Futtermittels die Fettsäuremischung in einer Menge von 1-6 Gew.-% verwendet wird, und im Falle eines Kraftfuttermittels die Menge der Fettsäuremischung 2-10 %, bezogen auf das Gesamtgewicht des Futtermittels, beträgt, wobei der Anteil an gesättigten Fettsäuren über 90 % beträgt und die Fettsäuremischung mindestens 99% freie Fettsäuren, mindestens 90 % Palmitinsäure (C16:0), höchstens 10 % Stearinsäure (C18:0), 0-3% andere Fettsäuren enthält und frei von Transfettsäuren ist, mit einem Schmelzpunkt von > 60 °C und einer Jodzahl von ≤ 1, dadurch wird die Stärke und das Protein zumindest teilweise vor mikrobiellem Abbau im Pansen geschützt, wobei die Menge der über das Futtermittel aufgenommenen Fettsäuremischung pro Menge der erzeugten Milch 60-300 g der Fettsäuremischung/10 kg Milch beträgt und die Milch gewonnen wird.

2. Milch nach Anspruch 1, **dadurch gekennzeichnet, daß** ihre Fettsäurezusammensetzung mindestens 5 %, vorzugsweise mindestens 10 % mehr Palmitolsäure als die Fettsäurezusammensetzung von herkömmlicher Milch enthält.

3. Milch nach Anspruch 1 oder 2, **dadurch gekennzeichnet, daß** ihre Fettsäurezusammensetzung mindestens 5 %, vorzugsweise mindestens 10 % mehr Palmitinsäure als die Fettsäurezusammensetzung der herkömmlichen Milch enthält.

4. Milch nach einem der Ansprüche 1 bis 3, **dadurch gekennzeichnet, dass** ihre Fettsäurezusammensetzung weniger C6-C12 gesättigte Fettsäuren als die Fettsäurezusammensetzung der herkömmlichen Milch enthält, vorzugsweise mindestens 5 %, noch bevorzugter mindestens 10 % weniger.

5. Milch nach einem der Ansprüche 1-4, **dadurch gekennzeichnet, daß** ihre Fettsäurezusammensetzung mindestens 2,0%, vorzugsweise mindestens 2,3%, noch bevorzugter mindestens 2,5 % und besonders bevorzugt mindestens 2,7 % Palmitolsäure enthält.

6. Milch nach einem der Ansprüche 1-5, **dadurch gekennzeichnet, daß** ihre Fettsäurezusammensetzung mindestens 35 %, vorzugsweise mindestens 37 % Palmitinsäure umfaßt.

7. Milch nach einem der Ansprüche 1-6, **dadurch gekennzeichnet, daß** ihre Fettsäurezusammensetzung höchstens 10 %, vorzugsweise höchstens 9,8 %, noch bevorzugter höchstens 9,5 %, noch bevorzugter höchstens 9,3 %, noch bevorzugter höchstens 9,0 % und noch bevorzugter höchstens 8,5 %, C6-C12 gesättigte Fettsäuren enthält.

8. Milch nach einem der Ansprüche 1-7, **dadurch gekennzeichnet, dass** sie mindestens eine gesundheitsfördernde Komponente enthält, welche ausgewählt ist aus der Gruppe bestehend aus Pflanzensterolen und deren Estern, n-3-Fettsäuren, Vitaminen wie A-, D-, E- und K-Vitaminen, Ballaststoffen, Probiotika und Mineralstoffen wie Kalzium.

9. Milchherstellungsverfahren zur Herstellung einer Milch nach einem der Ansprüche 1 bis 7, **dadurch gekennzeichnet, daß** einem Wiederkäuer eine die Milchzusammensetzung verändernde Menge eines Vollfutter- oder eines Kraftfuttersmittels gegeben wird, das herkömmliche Futtermittelbestandteile und herkömmliche Zusatzstoffe und andere Hilfsstoffe enthält, einschließlich Protein in einer Menge von 15-55 % und Stärke in einer Menge von 5-50 % der herkömmlichen Futtermittelbestandteile und herkömmlichen Zusatzstoffe und anderen Hilfsstoffen, und wobei das Futtermittel im Inneren und auf der Oberfläche der Futtermittelrohstoffteilchen eine Fettsäuremischung enthält, wobei im Falle eines Komplettfuttermittels die Fettsäuremischung in einer Menge von 1-6 Gew.-% verwendet wird, und im Falle eines Kraftfuttermittels die Menge der Fettsäuremischung 2-10 % beträgt, bezogen auf das Gesamtgewicht des Futtermittels, wobei der Anteil der gesättigten Fettsäuren in der Fettsäuremischung über 90 % beträgt und die Fettsäuremischung mindestens 99 % freie Fettsäuren, mindestens 90 % Palmitinsäure (C16:0), höchstens 10 % Stearinsäure (C18:0), 0-3 % andere Fettsäuren enthält, und frei von trans-Fettsäuren ist, einen Schmelzpunkt von > 60 °C und eine Jodzahl von ≤ 1 hat, wodurch die Stärke und das Protein zumindest teilweise vor mikrobiellem Abbau im Pansen geschützt werden, wobei die Menge der über das Futtermittel aufgenommenen Fettsäuremischung pro Menge der erzeugten Milch 60-300 g der Fettsäuremischung / 10 kg Milch beträgt und die Milch gewonnen wird.

10. Milch nach einem der Ansprüche 1-7, die ferner 0,1-10 Gew.-% Pflanzensterin oder Pflanzensterinester enthält, zur Verwendung bei der Erhöhung von HDL-Cholesterin und der Senkung von LDL-Cholesterin im menschlichen Blut.

## Revendications

1. Lait, **caractérisé en ce que** sa composition en acides gras comprend au moins 1,8 % d'acide palmitoléique, au moins 33 % d'acide palmitique et, en plus, au total au maximum 2,0 % d'acides gras trans et dans lequel ledit lait a été produit par un procédé dans lequel on donne à un ruminant une quantité changeant la composition du lait d'une alimentation complète ou concentrée qui contient des ingrédients d'aliments classiques et des additifs classiques et d'autres agents auxiliaires, dans lequel les ingrédients d'aliments classiques et les additifs classiques et d'autres agents auxiliaires comprennent au moins entre 15 et 55 % de protéine et entre 5 et 50 % d'amidon, dans lequel ladite alimentation contient, à l'intérieur et sur la surface de particules de matières premières alimentaires, un mélange d'acides gras, dans lequel, dans le cas d'un aliment complet, le mélange d'acides gras est utilisé en une quantité comprise entre 1 et 6 % en poids et dans le cas d'un aliment concentré, la quantité de mélange d'acides gras est comprise entre 2 et 10 %, en se basant sur le poids total des aliments, dans lequel la proportion d'acides gras saturés est supérieure à 90 % et le mélange d'acides gras comprend au moins 99 % d'acides gras libres, au moins 90 % d'acide palmitique (C16:0), au maximum 10 % d'acide stéarique (C18:0), entre 0 et 3 % d'autres acides gras et est dépourvu d'acides gras trans, présente un point de fusion supérieure à 60 °C et un indice d'iode inférieur ou égal à 1, ce qui permet de protéger au moins partiellement l'amidon et la protéine contre une dégradation microbienne dans le rumen, dans lequel la quantité de mélange d'acides gras ingérée par le biais des aliments par quantité de lait produit est comprise entre 60 et 300 g de mélange d'acides gras/10 kg de lait et le lait est récupéré.

2. Lait selon la revendication 1, **caractérisé en ce que** sa composition en acides gras comprend au moins 5 %, de préférence au moins plus de 10 % d'acide palmitoléique que la composition en acides gras du lait classique.

3. Lait selon la revendication 1 ou 2, **caractérisé en ce que** sa composition en acides gras comprend au moins 5 %, de préférence au moins plus de 10 % d'acide palmitique que la composition en acides gras du lait classique.

4. Lait selon l'une quelconque des revendications 1 à 3, **caractérisé en ce que** sa composition en acides gras comprend moins d'acides gras saturés en C6-C12 que la composition en acides gras du lait classique, de préférence au moins inférieure à 5 %, plus préférablement au moins inférieure à 10 %.

5. Lait selon l'une quelconque des revendications 1 à 4, **caractérisé en ce que** sa composition en acides gras comprend au moins 2,0 %, de préférence au moins 2,3 %, plus préférentiellement au moins 2,5 % et mieux encore au moins 2,7% d'acide palmitoléique.

6. Lait selon l'une quelconque des revendications 1 à 5, **caractérisé en ce que** sa composition en acides gras comprend au moins 35 %, de préférence au moins 37 % d'acide palmitique.

7. Lait selon l'une quelconque des revendications 1 à 6, **caractérisé en ce que** sa composition en acides gras comprend au maximum 10 %, de préférence au maximum 9,8 %, plus préférentiellement au maximum 9,5 %, encore plus préférentiellement au maximum 9,3 %, toujours encore plus préférentiellement au maximum 9,0 % et mieux encore au maximum 8,5 % d'acides gras saturés en C6-C12.

8. Lait selon l'une quelconque des revendications 1 à 7, **caractérisé en ce qu'**il contient au moins un composant améliorant la santé sélectionné dans le groupe constitué par des phytostérols et leurs esters, des acides gras n-3, des vitamines, telles que les vitamines A, D, E et K, les fibres nutritionnelles, des probiotiques et des minéraux tels que le calcium.

9. Processus de préparation de lait pour préparer un lait selon l'une quelconque des revendications 1 à 7, **caractérisé en ce qu'**on donne à un ruminant une quantité changeant la composition du lait d'une alimentation complète ou concentrée qui contient des ingrédients d'aliments classiques et des additifs classiques et d'autres agents auxiliaires, y compris une protéine en une quantité comprise entre 15 et 55 % et de l'amidon en une quantité comprise entre 5 et 50 % des ingrédients d'aliments classiques et des additifs classiques et d'autres agents auxiliaires, et dans lequel ladite alimentation contient, à l'intérieur et sur la surface de particules de matières premières alimentaires, un mélange d'acides gras, dans lequel, dans le cas d'un aliment complet, le mélange d'acides gras est utilisé en une quantité comprise entre 1 et 6 % en poids et dans le cas d'un aliment concentré, la quantité de mélange d'acides gras est comprise entre 2 et 10 %, en se basant sur le poids total des aliments, dans lequel la proportion d'acides gras saturés dans le mélange d'acides gras est supérieure à 90 % et le mélange d'acides gras comprend au moins 99 % d'acides gras libres, au moins 90 % d'acide palmitique (C16:0), au maximum 10 % d'acide stéarique (C18:0), entre 0 et 3 % d'autres acides gras et est dépourvu d'acides gras trans, présente un point de fusion supérieure à 60 °C et un indice d'iode inférieur ou égal à 1, ce qui permet de protéger au moins partiellement l'amidon et la protéine contre une dégradation microbienne dans le rumen, dans lequel la quantité de mélange d'acides gras ingérée par le biais des aliments par quantité de lait produit est comprise entre 60 et 300 g de mélange d'acides gras/10 kg de lait et le lait est récupéré.

10. Lait selon l'une quelconque des revendications 1 à 7, contenant en outre entre 0,1 et 10 % en poids de phytostérol ou d'ester de phytostérol destiné à être utilisé lors de l'augmentation du cholestérol HDL et la baisse du cholestérol LDL dans le sang humain.
